(19) Europäisches Patentamt
European Patent Office
Office européen des brevets

(11) **EP 2 919 362 B1**

(12) **FASCICULE DE BREVET EUROPEEN**

(45) Date de publication et mention
de la délivrance du brevet:
**31.10.2018 Bulletin 2018/44**

(51) Int Cl.:
**H02J 7/02** *(2016.01)*        **H02J 7/34** *(2006.01)*
**H02J 9/00** *(2006.01)*

(21) Numéro de dépôt: **15157699.8**

(22) Date de dépôt: **05.03.2015**

(54) **DISPOSITIF ET PROCÉDÉ AMELIORÉS D'ALIMENTATION POUR ENSEMBLE CAPTEUR SANS FIL**

VERBESSERTES SYSTEM UND VERFAHREN ZUR SPEISUNG EINES DRAHTLOSEN FÜHLERS.

IMPROVED SUPPLY SYSTEM AND METHOD FOR A WIRELESS SENSOR.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.03.2014 FR 1451950**

(43) Date de publication de la demande:
**16.09.2015 Bulletin 2015/38**

(73) Titulaire: **Schneider Electric Industries SAS
92500 Rueil-Malmaison (FR)**

(72) Inventeur: **Raisigel, Hynek
38050 Grenoble Cédex 9 (FR)**

(74) Mandataire: **Brevalex
95, rue d'Amsterdam
75378 Paris Cedex 8 (FR)**

(56) Documents cités:
**DE-A1- 10 017 902      JP-A- H0 759 271
JP-A- H09 261 861      US-A1- 2009 026 842**

**Description**

**DOMAINE TECHNIQUE ET ART ANTÉRIEUR**

La présente demande concerne le domaine des dispositifs d'alimentation pour ensembles capteurs dotés d'un système de communication sans fil et dont l'approvisionnement en énergie électrique est partiellement dû à un générateur permettant de récupérer une énergie environnante à l'ensemble capteur et de produire en conséquence une énergie électrique.

Dans le domaine des capteurs sans fils, le document EP 2 395 594 A1 présente un dispositif d'alimentation permettant d'alimenter un ensemble capteur par le biais d'une énergie électrique chargée dans un condensateur tampon.

Le dispositif d'alimentation est doté d'un premier générateur de type photovoltaïque qui peut être suppléé, en cas de faible éclairement ou d'éclairement nul, par un deuxième générateur électrochimique sous forme d'une batterie rechargeable.

Un système de gestion et de contrôle de la charge de la batterie rechargeable est prévu pour permettre de rendre fonctionnel l'ensemble capteur même après une longue période sans éclairement.

Les batteries rechargeables ont pour inconvénient d'avoir une durée de vie limitée et une capacité de charge électrique réduite.

Le document US 7 132 757 B2 présente quant à lui un dispositif pour alimenter un capteur comprenant un premier générateur permettant de récupérer une énergie mécanique qu'il transforme en énergie électrique et un générateur électrochimique pour suppléer le premier générateur. Le générateur électrochimique est de type non-rechargeable et sous forme d'une pile.

Un circuit permet de connecter directement la pile au capteur lorsque l'énergie électrique produite par le premier générateur est insuffisante.

Ce circuit a notamment pour inconvénient d'être consommateur en énergie électrique et peut s'avérer couteux lorsqu'il comporte un microcontrôleur.

Par ailleurs, pour protéger l'alimentation du capteur d'une surtension, une diode zener est prévue. Une telle diode présente pour principal désavantage d'avoir un courant inverse, de l'ordre de plusieurs micro-ampères, qui augmente significativement la consommation en courant du dispositif.

Le document US 2009/0026842 présente un dispositif d'alimentation doté d'un panneau solaire configuré pour que lorsque le niveau d'alimentation délivré par le panneau solaire est inférieur à un seuil donné, une pile serve d'alimentation d'appoint.

Il se pose donc le problème de réaliser un nouveau dispositif d'alimentation adapté pour un ensemble capteur sans fil, doté d'un premier générateur permettant de récupérer une énergie électrique ambiante et d'un deuxième générateur d'appoint, et qui ne présente pas les inconvénients mentionnés ci-dessus, en particulier qui soit amélioré en termes de consommation d'énergie électrique et de coût de mise en oeuvre.

**EXPOSÉ DE L'INVENTION**

La présente invention concerne tout d'abord un dispositif d'alimentation électrique pour délivrer une alimentation électrique à un ensemble capteur sans-fil, le dispositif d'alimentation comportant :

- un premier moyen générateur d'énergie électrique configuré pour récupérer une énergie ambiante dans l'environnement de l'ensemble capteur et produire une énergie électrique en fonction de l'énergie ambiante récupérée,
- un deuxième moyen générateur comprenant une pile, pour délivrer une énergie électrique destinée à suppléer celle produite par le premier moyen générateur,
- un moyen de stockage d'énergie électrique comprenant un condensateur agencé de manière à recevoir une énergie électrique en provenance du premier moyen générateur et/ou du deuxième moyen générateur, et appliquer un niveau donné d'alimentation électrique $V_{DD}$ à l'ensemble capteur,

le dispositif d'alimentation comportant un circuit de gestion d'énergie électrique configuré pour limiter le niveau donné d'alimentation électrique $V_{DD}$ entre une borne inférieure $V_{minC1}$ et une borne supérieure $V_{MAXC1}$,

ledit circuit comprenant un transistor unipolaire et conducteur lorsque sa tension grille-source est nulle, le transistor unipolaire étant agencé par rapport au premier moyen générateur, au deuxième moyen générateur, et au moyen de stockage, de sorte à avoir une tension grille-source qui dépend d'une différence entre l'énergie électrique délivrée par le deuxième moyen générateur et le niveau d'alimentation donné.

Le circuit de gestion d'énergie électrique présente ainsi une très basse consommation, ce qui est particulièrement avantageux pour alimenter un dispositif sans-fil dont l'approvisionnement en énergie électrique dépend d'une récupération d'énergie environnante.

L'agencement du transistor unipolaire peut être également prévu de sorte que sa tension drain-source dépend d'une différence entre l'énergie électrique produite par le premier moyen générateur et le niveau alimentation donné.

Avec un tel type de transistor on assure le maintien de la tension $V_{DD}$ à un niveau inférieur à un seuil $V_{MAXC1}$ prédéterminé tout en limitant la consommation du dispositif d'alimentation.

L'agencement du transistor est tel que le seuil $V_{MAXC1}$ dépend de la tension délivrée par la pile qui est prédéterminée et dépend de la pile choisie, et de la tension de pincement du transistor qui est prédéterminée et dépend également du transistor choisi.

Selon une première possibilité de mise en oeuvre, le transistor unipolaire défini plus haut est un transistor JFET (pour « Junction Field Effect Transistor »). Un tel transistor a pour avantage de présenter une jonction intrinsèque grille-source que l'on peut utiliser pour faire passer du courant électrique en sens unique de la pile vers le condensateur de stockage tout en limitant son retour vers la pile.

Selon une deuxième possibilité de mise en oeuvre, le transistor unipolaire défini plus haut est un transistor MOSFET à déplétion (encore appelé transistor à appauvrissement).

Les transistors JFET et MOSFET à déplétion ont, au contraire des transistors MOS à enrichissement plus couramment utilisés, un canal conducteur lorsque leur tension grille-source est nulle.

Le dispositif d'alimentation suivant l'invention permet en outre :

- de profiter de la durée de vie plus longue des piles ainsi que de leur capacité en courant améliorée et de leur prix réduit par rapport aux générateurs électrochimiques rechargeables ;
- de pouvoir utiliser des piles avec une résistance interne élevée (par exemple type bouton) grâce au condensateur de stockage capable de fournir des pics de courant ;
- de pouvoir garantir un temps de fonctionnement minimal d'un ensemble capteur indépendant de la disponibilité de l'énergie ambiante à récupérer ;
- de nécessiter un faible nombre de composants, ce qui permet de réaliser des gains notamment en termes de coût de mise en oeuvre.

Le circuit de gestion d'énergie électrique peut également comprendre des moyens pour bloquer un retour de courant vers le deuxième moyen générateur, afin de protéger ce dernier tout en permettant un passage de courant dans le sens opposé.

Lorsque le transistor unipolaire défini plus haut est un transistor JFET, la jonction intrinsèque entre sa grille et son canal forme un moyen pour bloquer un retour de courant vers la pile. La jonction intrinsèque peut également permettre de recharger le condensateur de stockage à partir de la pile quand le niveau d'alimentation $V_{DD}$ est faible.

Une diode disposée entre la grille et la source du transistor unipolaire peut également former un moyen pour bloquer un retour de courant vers le deuxième moyen générateur. Cette diode peut également permettre de recharger le condensateur de stockage à partir de la pile quand le niveau d'alimentation $V_{DD}$ est faible.

Selon une possibilité de mise en oeuvre, le deuxième moyen générateur peut comprendre ou être associé à des moyens pour limiter un courant de décharge de la pile, par exemple sous forme d'au moins une résistance en série avec la pile.

Lorsque le transistor unipolaire est un transistor JFET, des moyens pour limiter un courant à travers la jonction intrinsèque entre la grille et le canal du transistor JFET peuvent être prévus, par exemple sous forme d'au moins une résistance connectée à la grille du transistor.

Selon une possibilité de mise en oeuvre, le dispositif d'alimentation peut comprendre en outre des moyens pour bloquer un retour de courant vers le premier moyen générateur, par exemple sous forme d'au moins une diode.

Selon une possibilité de mise en oeuvre du dispositif d'alimentation, le premier moyen générateur peut comprendre un module photovoltaïque.

La présente invention prévoit en outre un ensemble capteur sans-fil comprenant un dispositif d'alimentation tel que défini plus haut.

L'ensemble capteur peut être ainsi doté d'au moins un capteur d'au moins une grandeur physique à mesurer et d'un module radio fréquence prévu pour effectuer des communications sans fil, notamment pour transmettre à un dispositif extérieur des données relatives à des mesures effectuées par le capteur.

L'ensemble capteur peut également comprendre un circuit pour traiter des données de mesure de la ou les grandeur(s) physique(s) mesurées en provenance du capteur et transmettre ces données au module RF.

L'ensemble capteur peut avantageusement comprendre un ou plusieurs capteurs parmi les capteurs de grandeurs physiques suivants : capteur d'humidité, capteur de température, capteur de luminosité, capteur de gaz, en particulier de $CO_2$.

L'invention concerne également un procédé d'alimentation d'un ensemble capteur sans-fil à l'aide d'un dispositif d'alimentation tel que défini plus haut.

## BRÈVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

La Figure 1 illustre un dispositif d'alimentation destiné à alimenter un capteur sans-fil et qui est mis en oeuvre selon un mode de réalisation de l'invention ;
La Figure 2 illustre un exemple particulier de dispositif d'alimentation suivant l'invention doté d'un circuit de gestion d'énergie électrique comprenant un transistor JFET à canal N ;
La Figure 3 illustre un exemple de variation d'une tension d'alimentation susceptible d'être délivrée par un dispositif d'alimentation selon un mode de réalisation de l'invention ;
La Figure 4 illustre une variante de dispositif d'alimentation suivant l'invention doté d'un circuit de gestion d'énergie électrique comprenant un transistor MOSFET à déplétion et de type N ;
La Figure 5 illustre une autre variante de dispositif d'alimentation suivant l'invention doté d'un circuit de gestion d'énergie électrique comprenant un transistor JFET à canal P ;

La Figure 6 illustre une autre variante de dispositif d'alimentation suivant l'invention doté d'un circuit de gestion d'énergie électrique comprenant un transistor MOSFET à déplétion et de type P.

## EXPOSÉ DÉTAILLÉ DE MODES DE RÉALISATION PARTICULIERS

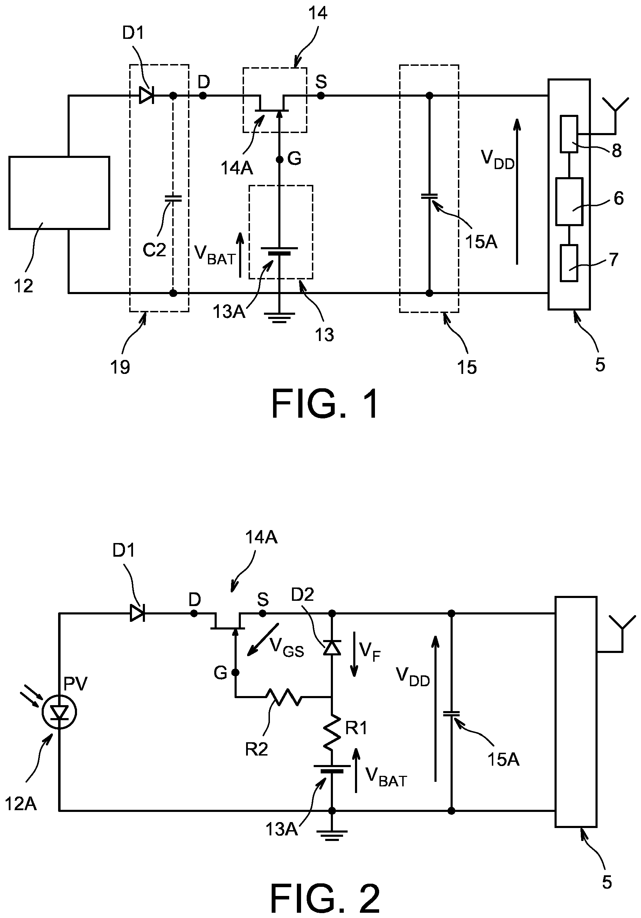

La figure 1 représente un schéma d'un dispositif d'alimentation selon un mode de réalisation de l'invention.

Ce dispositif d'alimentation a pour fonction d'alimenter un ensemble capteur 5 comprenant un ou plusieurs capteurs 7, et qui peut être doté d'un circuit de traitement 6 et d'un module RF 8. L'ensemble capteur 5 est configuré pour établir des communications sans fil avec un dispositif extérieur (non représenté) et qui sont relatives aux mesures effectuées par le ou les capteurs 7.

Le dispositif d'alimentation peut être prévu pour délivrer une alimentation en énergie électrique à l'ensemble capteur 5, sous forme de pics de courant, correspondant en particulier à des instants où l'ensemble capteur 5 effectue des mesures ou communique avec l'extérieur.

Le dispositif d'alimentation comprend un premier moyen générateur 12 adapté pour récupérer une énergie dite « ambiante » qui se trouve dans l'environnement de l'ensemble capteur 5 et pour convertir cette énergie ambiante en énergie électrique servant à alimenter l'ensemble capteur 5. L'énergie ambiante récupérée peut être par exemple, une énergie thermique, et/ou mécanique, et/ou électromécanique, et/ou une énergie lumineuse. Selon un exemple de réalisation particulier, le premier moyen générateur 12 de récupération d'énergie est avantageusement un module photovoltaïque.

En sortie du premier moyen générateur 12, un bloc redresseur 19 peut être prévu. Un tel bloc 19 permet également d'empêcher une décharge de courant vers le premier moyen générateur 12, en particulier dans un cas où l'énergie électrique produite par ce dernier est faible. Ce bloc 19 peut ainsi comprendre une diode D1 à faible tension de seuil $V_F$, par exemple de l'ordre de 0.3V telle qu'une diode Schottky ou un pont de diodes (non représenté). Le bloc redresseur 19 peut être doté en outre d'un ou plusieurs condensateurs de filtrage $C_2$.

Le premier moyen générateur 12 est associé à des moyens de stockage d'énergie électrique 15 ici formés d'au moins un condensateur 15A, dont l'énergie stockée sert à alimenter l'ensemble capteur 5. Un condensateur 15A permet avantageusement d'effectuer un nombre important de cycles de charges et de décharges.

Le condensateur 15A utilisé est de préférence un condensateur à faible courant d'auto-décharge, par exemple un condensateur de type céramique.

Les charges et décharges du condensateur 15A de stockage sont contrôlées de manière à assurer un bon niveau d'alimentation $V_{DD}$ à l'ensemble capteur 5, c'est-à-dire à un niveau d'alimentation $V_{DD}$ qui est supérieur à une borne ou à un seuil prédéterminé(e), en particulier une tension minimale $V_{minc1}$ nécessaire au fonctionnement de l'ensemble capteur 5.

Le niveau d'alimentation $V_{DD}$ est en outre contrôlé de manière à rester inférieur à une borne ou un seuil, en particulier une tension maximale $V_{MAXc1}$ prédéterminée en fonction de la tension maximale supportée par les composants de l'ensemble capteur 5. La tension maximale $V_{MAXc1}$ est en outre prévue suffisamment faible pour permettre de limiter la consommation du dispositif d'alimentation.

En présence d'énergie ambiante, ici lumineuse, le dispositif d'alimentation peut adopter une configuration dans laquelle le moyen générateur 12 recharge le condensateur 15A, tandis qu'en absence d'énergie ambiante, le dispositif d'alimentation est susceptible d'adopter une autre configuration dans laquelle le condensateur 15A est rechargé à l'aide d'un générateur électrochimique 13 d'appoint.

Dans le dispositif d'alimentation selon l'invention il est prévu d'utiliser un générateur d'appoint comprenant une pile 13A c'est à dire un générateur électrochimique non-rechargeable, dont la durée de vie et la capacité en courant sont supérieures à celles d'une batterie de même technologie. La pile 13A peut être par exemple au lithium i.e. avec une anode en lithium ou en composé de lithium, par exemple une pile référencée CR2016 ayant une tension délivrée de l'ordre de 3V et une capacité de charge électrique de l'ordre de 80 mAh, ou par exemple une pile référencée CR1220.

Le contrôle de la charge et la décharge du condensateur 15A et du niveau d'alimentation $V_{DD}$ de l'ensemble capteur 5, est assurée à l'aide d'un circuit de gestion de l'énergie électrique.

Dans le dispositif d'alimentation suivant l'invention, le circuit de gestion comprend un transistor unipolaire 14 de type à canal conducteur délivrant un courant $I_{DS}$ non-nul lorsque sa tension grille-source $V_{GS}$ est nulle. Un tel transistor unipolaire peut être de type JFET ou MOSFET à déplétion (encore appelé MOSFET à appauvrissement).

L'agencement du circuit de gestion d'énergie électrique, et en particulier celui du transistor unipolaire 14 est tel que la tension grille-source entre la grille G et la source S de ce transistor 14A dépend de la différence entre une tension $V_{BAT}$ délivrée par le générateur électrochimique 13 d'appoint et la tension $V_{DD}$ aux bornes du condensateur 15A et qui est appliquée à l'ensemble capteur 5. Dans l'exemple de réalisation de la figure 1, la grille du transistor unipolaire 14 est connectée à la pile 13A tandis que sa source est connectée à une borne du condensateur de stockage 15A. Ainsi, le niveau de courant drain-source Ids que le transistor 14 délivre est contrôlé par la différence entre le niveau de charge du condensateur 15A et la tension délivrée par le générateur électrochimique non-rechargeable.

Le transistor unipolaire 14 est également agencé de manière à avoir un drain sur lequel l'énergie électrique produite par le premier moyen générateur 12 est appliqué. La tension drain-source entre le drain D et la source S du transistor 14A dépend quant à elle de la différence entre la tension électrique générée par le premier moyen générateur 12 et l'énergie stockée aux bornes du condensateur 15A.

Le transistor unipolaire 14 dont le canal est conducteur et délivre un courant $I_{DS}$ non-nul lorsque sa tension grille-source $V_{GS}$ est nulle, est ainsi prévu pour contrôler les variations de la tension $V_{DD}$ aux bornes du condensateur en limitant notamment le niveau maximal de cette tension $V_{DD}$ appliquée à l'ensemble capteur. Le contrôle de la tension $V_{DD}$ est réalisé par une gestion de l'apport respectif en énergie électrique en provenance du premier moyen générateur 12 et du générateur électrochimique 13 d'appoint.

Dans l'exemple de réalisation illustré sur la figure 1, le transistor unipolaire est un transistor 14A de type JFET (JFET pour « Junction Field Effect Transistor ») avec un canal dopé N. Un tel type de transistor présente pour avantage de comporter une jonction en sa grille et son canal encore appelée « jonction intrinsèque » ou « diode intrinsèque » qui peut être utilisée pour la recharge du condensateur de stockage 15A à la pile 13A.

Un exemple de réalisation particulier du dispositif d'alimentation est illustré sur la figure 2, avec un premier moyen générateur 12 comprenant un module photovoltaïque 12A, et en sortie de ce module des moyens, par exemple sous forme d'une diode $D_1$, pour bloquer un retour de courant vers le module photovoltaïque 12A.

Cet exemple diffère de celui décrit précédemment en ce que des moyens pour bloquer un retour de courant vers la pile 13A, sont ici formés à l'aide d'une diode D2 entre la grille et la source du transistor 14A. La diode D2 peut être une diode Schottky, qui présente pour avantage d'avoir une faible tension de seuil $V_F$, par exemple de l'ordre de 0.3V Cette diode permet de faire passer du courant électrique en sens unique de la pile vers le condensateur de stockage avec une faible chute de tension.

Dans l'exemple de réalisation particulier de la figure 2, le dispositif d'alimentation comporte en outre des moyens pour limiter le courant délivré par la pile 13A sous forme, par exemple, d'au moins une résistance $R_1$ en série avec la pile 13A, ainsi que des moyens pour limiter le courant dans la diode ou jonction intrinsèque du transistor 14A JFET sous forme par exemple d'au moins une résistance $R_2$ connectée à la grille de ce dernier.

Un mode de fonctionnement de ce dispositif va à présent être donné. Lorsque le module photovoltaïque 12A se trouve en présence d'un éclairage suffisant, le condensateur 15A est rechargé à travers le transistor JFET 14A.

Lorsque le condensateur 15A est fortement déchargé, la tension grille-source $V_{GS}$ du transistor 14A est telle que ce dernier est passant afin de permettre une recharge du condensateur par la pile.

Lorsque le condensateur 15A n'est pas complètement chargé à sa tension $V_{MAXC1}$, la tension grille-source $V_{GS}$ du transistor 14A est telle que ce dernier est passant afin de permettre une recharge du condensateur par le premier moyen générateur 12.

La charge du condensateur 15A peut être alors réalisée jusqu'à une tension maximale $V_{DD} = V_{MAXC1}$, avec $V_{MAXC1} = V_{BAT} - V_{GScutoff}$ où $V_{BAT}$ la tension délivrée par la pile 13A, $V_{GScutoff}$ (encore notée Vgsthreshold ou tension de pincement) le seuil de tension grille-source au delà duquel le courant Ids qui circule du drain à la source du transistor devient nul et le transistor devient bloqué, et qui est négatif pour un transistor JFET de type à canal dopé N.

Par exemple, pour un pile 13A de type CR2032 avec une tension $V_{BAT}$ délivrée comprise entre 2.5 et 3.3V et un transistor 14A de type J/SST201 ayant une tension $V_{GScutoff}$ ou Vgsthreshold de 0.9 V, on peut avoir une tension maximale $V_{MAXC1}$ de l'ordre de 3.3 + 0.9 = 4.1 V.

Lorsque la charge du condensateur 15A est telle qu'elle atteint un seuil $V_{DD} = V_{MAXC1}$, pour permettre d'empêcher le dépassement de cette tension maximale $V_{MAXC1}$, le transistor 14A bloque le courant rechargeant le condensateur 15A. Le circuit de gestion d'énergie électrique empêche ainsi une création d'une surtension dans l'alimentation $V_{DD}$ appliquée à l'ensemble capteur 5A.

En absence d'éclairement, ou lorsque l'éclairement est trop faible pour que le module photovoltaïque 12A puisse produire une énergie électrique suffisante à l'alimentation de l'ensemble capteur 5, le condensateur 15A est rechargé à partir de la pile 13A à travers la diode D2 et la résistance R1 lorsque $V_{DD} < V_{BAT} - V_F$ avec $V_F$ la tension de seuil de la diode D2.

La résistance R1 placée en série avec la pile 13A, limite alors le courant de décharge de cette dernière et permet d'éviter d'endommager ou bien de raccourcir la durée de vie de la pile 13A. Dans ce mode de fonctionnement sans ou à faible éclairement du module photovoltaïque 12A, le transistor 14A reste passant et la diode D1 permet de protéger le module photovoltaïque 12A contre un retour de courant.

La résistance R2 permet de limiter le passage de courant à travers la diode intrinsèque du transistor 14A pour un cas où la tension aux bornes du condensateur 15A est telle que $V_{DD} < V_{BAT} - V_F$, avec $V_F$ est la plus petite tension de seuil de la diode D2 et/ou de la diode intrinsèque du transistor JFET 14A.

Dans un cas où le courant délivré par la pile 13A est inférieur au courant de fuite ou résiduel de grille $I_{GSMAX}$ encore noté $I_{GSS}$ du transistor 14A, la diode intrinsèque existant entre sa grille et son canal peut être utilisée à la place de la diode D2 comme dans l'exemple illustré sur la figure 1, la résistance R2 étant alors également facultative.

Notons que le courant inverse $I_{GSS}$ de la diode D2 et/ou de la diode intrinsèque du transistor JFET 14A est généralement très faible, par exemple de l'ordre 1 nA . Le courant $I_{GSS}$ représente la seule consommation statique du circuit de gestion d'énergie qui est très inférieure à la consommation statique de solutions basées sur une diode zener ou un régulateur linéaire de la tension LDO (pour « low-dropout »). A titre d'information, un courant de fuite inverse d'une diode zener limitant une tension à 3.3V peut être de l'ordre de 5 µA, c'est à dire très supérieur à un courant $I_{GSS}$ de 1nA et même supérieur au courant moyen consommé de certains capteurs sans-fil.

La valeur de tension minimale $V_{minC1}$ au dessus de laquelle la tension d'alimentation $V_{DD}$ est bornée peut être exprimée par la relation suivante:

$$V_{minC1} = V_{BAT} - V_F - (R1+ESR_{BAT})*I_{DD\ MAX,}$$

avec $I_{DD\_MAX}$ un courant maximal consommé par l'ensemble capteur 5, $ESR_{BAT}$ la résistance interne de la pile, $V_F$ la tension de seuil de la diode D2, qui peut être égale à environ 0.3 V pour une diode Schottky.

Lorsque la pile 13A est une pile de type CR2032, on peut avoir une tension $V_{BAT}$ délivrée par cette dernière comprise entre 2.5 et 3.3V, et $ESR_{BAT}$ par exemple de l'ordre de 15Ω ainsi que $I_{DD\_MAX}$ par exemple de l'ordre de 13mA, et prévoir R1 de l'ordre de 0 Ω. Ainsi, pour ce type de pile, la valeur de tension minimal $V_{minC1}$ peut être par exemple de l'ordre de 2V ($V_{minC1} = V_{BATmin}$ - $V_F$ - (R1+$ESR_{BAT}$)*$I_{DD\ MAX}$ = 2.5V - 0.3V - (15Ω)*13mA = 2V).

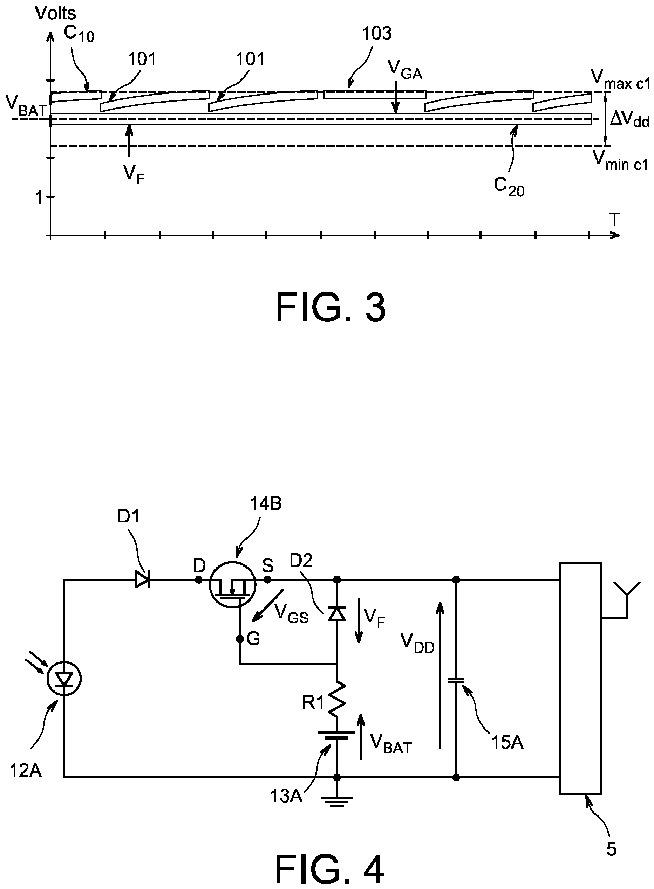

La figure 3 illustre des variations de la tension $V_{DD}$ fournie en sortie du dispositif d'alimentation précédemment décrit en présence d'éclairage. Des pics de courant (variations brusques 101 sur la courbe $C_{10}$) sont consommés par l'ensemble capteur 5 aux instants où il effectue des mesures et/ou une communication radio. Entre ces instants (portion stable 103 sur la courbe $C_{10}$) l'ensemble capteur est en veille.

En présence d'éclairage, le module photovoltaïque 12A recharge ainsi directement le condensateur 15A à une tension qui reste inférieure à une borne ou un seuil $V_{MAXC1}$ prédéterminé qui dépend de la tension $V_{BAT}$ délivrée par la batterie et $V_{GSthreshold}$ le seuil de tension grille-source au delà duquel le courant $I_{DS}$ qui circule du drain à la source du transistor devient nul et le transistor devient bloqué.

Dans cet exemple particulier de réalisation, la capacité du condensateur de stockage 15A a été prévue de sorte qu'un pic de courant dû à un cycle de mesure de l'ensemble capteur et/ou à une communication radio ne décharge pas le condensateur plus que $\Delta V = V_{MAXC1}$ - $V_{BAT}$. Par cette optimisation on peut limiter l'usure de la pile 13 dont l'énergie électrique n'est pas consommée en présence suffisante d'énergie à récupérer.

Une variante de réalisation (figure 4) de l'exemple précédemment décrit prévoit le remplacement du transistor JFET à canal N par un autre type de transistor unipolaire, en particulier un transistor MOSFET à déplétion 14B (encore appelé transistor à appauvrissement) et qui est également conducteur lorsque la tension grille-source $V_{GS}$ est nulle.

Les exemples de réalisation du circuit de gestion d'énergie électrique du dispositif d'alimentation ont été donnés avec des transistors unipolaires de type N.

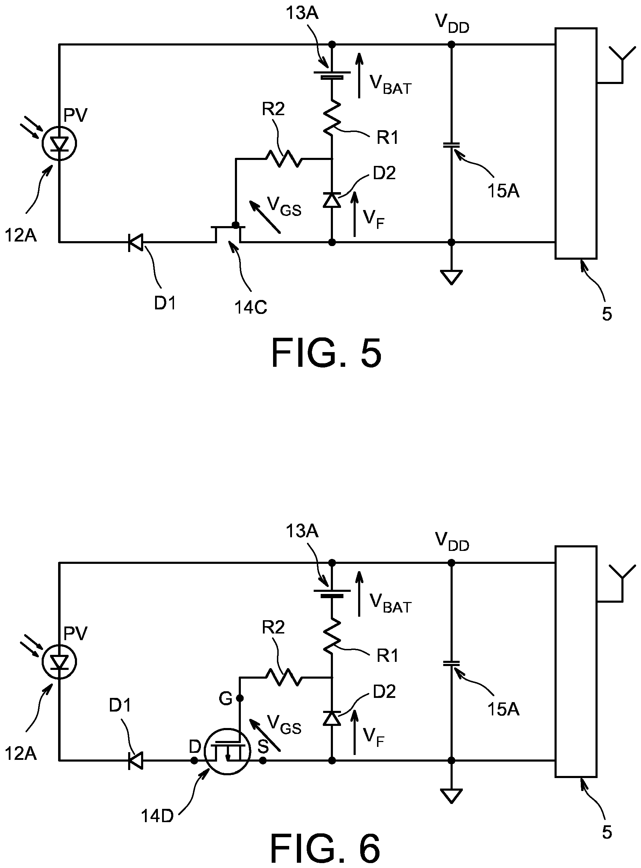

Une variante de réalisation illustrée sur la figure 6 prévoit le remplacement dans le circuit de gestion d'énergie électrique, du transistor JFET à canal N par un transistor JFET à canal P.

Une autre variante de réalisation illustrée sur la figure 7, prévoit le remplacement du transistor MOSFET à déplétion et de type à canal N par un transistor JFET MOSFET à déplétion à canal dopé N.

L'ensemble capteur 5 alimenté par l'un ou l'autre des exemples dispositifs d'alimentation décrits précédemment comprend un module doté d'un ou plusieurs capteurs 7 configurés pour détecter une ou plusieurs grandeur(s) physique(s) à mesurer, par exemple telles que la température, la pression, l'humidité, un éclairement.

Ce module peut également comprendre un capteur de gaz qui peut être par exemple adapté à la détection et à la mesure de $CO_2$, et/ou un capteur de mouvement.

Le circuit de traitement 6 connecté au(x) capteur(s) 7 permet de traiter des données de mesure de la ou les grandeur(s) physique(s) à mesurer, qui peuvent être ensuite traduites en signal radio fréquence par le module de communication 8 et communiquées à un dispositif extérieur via une liaison sans-fil.

**Revendications**

1. Dispositif d'alimentation électrique pour délivrer une alimentation électrique à un ensemble capteur (5) sans-fil, le dispositif d'alimentation comportant :

    - un premier moyen générateur (12) d'énergie électrique configuré pour récupérer une énergie ambiante dans l'environnement de l'ensemble capteur (5) et produire une énergie électrique en fonction de l'énergie ambiante récupérée,
    - un deuxième moyen générateur (13) d'énergie électrique comprenant une pile (13A), pour délivrer une énergie électrique d'appoint,
    - un moyen de stockage (15) d'énergie électrique comprenant un condensateur (15A) agencé de manière à recevoir une énergie électrique en provenance du premier moyen générateur (12) et/ou du deuxième moyen générateur (13), et appliquer un niveau donné d'alimentation électrique ($V_{DD}$) à l'ensemble capteur (5),
- un circuit de gestion d'énergie électrique configuré pour maintenir le niveau donné d'alimentation électrique ($V_{DD}$) supérieur à une borne inférieure ($V_{minC1}$),

le circuit de gestion d'énergie électrique étant configuré en outre pour limiter le niveau donné d'alimentation électrique à une borne supérieure ($V_{MAXC1}$), ledit circuit comprenant un transistor unipolaire (14A, 14B, 14C, 14D) à canal conducteur lorsque sa tension grille-source ($V_{GS}$) est nulle, le transistor unipolaire étant agencé par rapport au premier moyen générateur (12), au deuxième moyen générateur (13), et au moyen de stockage (15), de sorte que la tension grille-source dépend d'une différence entre l'énergie électrique délivrée par le deuxième moyen générateur et le niveau d'alimentation donné ($V_{DD}$).

**2.** Dispositif selon la revendication 1, le transistor unipolaire étant un transistor JFET (14A, 14C).

**3.** Dispositif selon la revendication 1, le transistor unipolaire étant un transistor MOSFET à déplétion (14B, 14D).

**4.** Dispositif selon l'une des revendication 1 à 3, comprenant en outre des moyens (D'int, D2) pour faire recharger le moyen de stockage (15) à partir du deuxième moyen générateur (13) tout en empêchant un retour de courant vers le deuxième moyen générateur (13).

**5.** Dispositif selon la revendication 4, dans lequel le transistor unipolaire est un transistor JFET comprenant une jonction intrinsèque entre sa grille et son canal, les moyens (D'int, D2) pour faire recharger le moyen de stockage (15) à partir du deuxième moyen générateur (13) tout en empêchant un retour de courant vers le deuxième moyen générateur (13) comprennent ladite jonction intrinsèque (D'int).

**6.** Dispositif selon la revendication 4, dans lequel les moyens (D'int, D2) faire recharger le moyen de stockage (15) à partir du deuxième moyen générateur (13) tout en empêchant un retour de courant vers le deuxième moyen générateur (13) comprennent une diode (D2) entre la grille et la source du transistor unipolaire.

**7.** Dispositif selon l'une des revendications 1 à 6, dans lequel le deuxième moyen générateur (13) comprend des moyens (R1) pour limiter un courant de décharge de la pile (13A).

**8.** Dispositif selon l'une des revendications 1 à 7, dans lequel le transistor unipolaire est un transistor JFET (14A, 14C), comprenant en outre des moyens (R2) pour limiter un courant à travers une jonction intrinsèque (D'int) entre la grille et le canal du transistor JFET.

**9.** Dispositif selon l'une des revendications 1 à 8, comprenant en outre des moyens (D1) pour bloquer un retour de courant vers le premier moyen générateur (12).

**10.** Dispositif selon l'une quelconque des revendications 1 à 9, le premier moyen générateur (12) comprenant un module photovoltaïque (12A).

**11.** Ensemble capteur (5) comportant :

- au moins un capteur (7) d'au moins une grandeur physique à mesurer,
- un circuit de traitement (6) connecté audit capteur pour traiter des données de mesure de la grandeur physique à mesurer, et
- un module radio fréquence (8) pour communication sans fil,
- un dispositif d'alimentation selon l'une quelconque des revendications 1 à 10.

**12.** Ensemble capteur selon la revendication 11, comprenant au moins un capteur parmi les capteurs de grandeurs physiques suivants : capteur d'humidité, capteur de température, capteur de luminosité, capteur de gaz en particulier de $CO_2$.

**13.** Procédé d'alimentation électrique d'un ensemble capteur (5) sans-fil, le procédé comportant l'utilisation d'un dispositif d'alimentation selon l'une des revendications 1 à 10.

**Patentansprüche**

**1.** Elektrische Versorgungsvorrichtung zum Bereitstellen einer elektrischen Versorgung für eine drahtlose Sensoranordnung (5), wobei die Versorgungsvorrichtung Folgendes aufweist:

- eine erste Einrichtung zum Erzeugen (12) elektrischer Energie, die ausgestaltet ist, um eine Umgebungsenergie aus der Umgebung der Sensoranordnung (5) zurückzugewinnen und um elektrische Energie in Abhängigkeit von der zurückgewonnenen Umgebungsenergie zu erzeugen,
- eine zweite Einrichtung zum Erzeugen (13) elektrischer Energie, die eine Batterie (13a) zum Bereitstellen einer zusätzlichen elektrischen Energie umfasst,
- eine Einrichtung zum Speichern (15) elektrischer Energie, die einen Kondensator (15A) umfasst, der so eingerichtet ist, dass er eine elektrische Energie von der ersten Erzeugereinrichtung (12) und/oder von der zweiten Erzeugereinrichtung (13) empfängt und eine bestimmte elektrische Versorgungsstärke (Voo) für die Sensoranordnung (5) nutzbar macht,
- eine Schaltung zur Verwaltung elektrischer Energie, die ausgestaltet ist, um die bestimmte elektrische Versorgungsstärke (Voo) über einem unteren Grenzwert ($V_{minC1}$) zu halten,

wobei die Schaltung zur Verwaltung elektrischer Energie ferner ausgestaltet ist, um die bestimmte elektrische Versorgungsstärke ($V_{DD}$) auf einen oberen Grenzwert ($V_{maxC1}$) zu begrenzen, wobei die Schaltung einen unipolaren Transistor (14A, 14B, 14C, 14D) mit leitendem Kanal umfasst, wenn seine Gate-Source-Spannung ($V_{ss}$) gleich null ist, wobei der unipolare Transistor relativ zu der ersten Erzeugereinrichtung (12), zu der zweiten Erzeugereinrichtung (13) und zu der Speichereinrichtung (15) so eingerichtet ist, dass die Gate-Source-Spannung von einer Differenz zwischen der elektrischen Energie, die von der zweiten Erzeugereinrichtung bereitgestellt wird, und der bestimmten Versorgungsstärke ($V_{DD}$) abhängt.

2. Vorrichtung nach Anspruch 1, wobei der unipolare Transistor ein JFET-Transistor (14A, 14C) ist.

3. Vorrichtung nach Anspruch 1, wobei der unipolare Transistor ein MOSFET-Transistor mit Ladungsverarmung (14B, 14D) ist.

4. Vorrichtung nach einem der Ansprüche 1 bis 3, ferner umfassend Einrichtungen (D'int, D2), um die Speichereinrichtung (15) von der zweiten Erzeugereinrichtung (13) unter Verhinderung einer Stromrückleitung zu der zweiten Erzeugereinrichtung (13) hin aufladen zu lassen.

5. Vorrichtung nach Anspruch 4, wobei der unipolare Transistor ein JFET-Transistor ist, der einen eigenleitenden Übergang zwischen seinem Gate und seinem Kanal umfasst, wobei die Einrichtungen (D'int, D2), um die Speichereinrichtung (15) von der zweiten Erzeugereinrichtung (13) unter Verhinderung einer Stromrückleitung zu der zweiten Erzeugereinrichtung (13) hin aufladen zu lassen, den eigenleitenden Übergang (D'int) umfassen.

6. Vorrichtung nach Anspruch 4, wobei die Einrichtungen (D'int, D2), um die Speichereinrichtung (15) von der zweiten Erzeugereinrichtung (13) unter Verhinderung einer Stromrückleitung zu der zweiten Erzeugereinrichtung (13) hin aufladen zu lassen, eine Diode (D2) zwischen dem Gate und der Source des unipolaren Transistors umfassen.

7. Vorrichtung nach einem der Ansprüche 1 bis 6, wobei die zweite Erzeugereinrichtung (13) Einrichtungen (R1) zur Begrenzung eines Entladestroms der Batterie (13A) umfasst.

8. Vorrichtung nach einem der Ansprüche 1 bis 7, wobei der unipolare Transistor ein JFET-Transistor (14A, 14C) ist, der ferner Einrichtungen (R2) zur Begrenzung eines Stroms über einen eigenleitenden Übergang (D'int) zwischen dem Gate und dem Kanal des JFET-Transistors umfasst.

9. Vorrichtung nach einem der Ansprüche 1 bis 8, ferner umfassend Einrichtungen (D1) zum Sperren einer Stromrückleitung zu der ersten Erzeugereinrichtung (12) hin.

10. Vorrichtung nach einem der Ansprüche 1 bis 9, wobei die erste Erzeugereinrichtung (12) ein Fotovoltaikmodul (12A) umfasst.

11. Sensoranordnung (5) mit:

   - mindestens einem Sensor (7) für eine zu messende physikalische Größe,
   - eine Verarbeitungsschaltung (6), die mit dem Sensor verbunden ist, um Messdaten der zu messenden physikalischen Größe zu verarbeiten, und
   - ein Hochfrequenzmodul (8) für drahtlose Kommunikation,
   - eine Versorgungsvorrichtung nach einem der Ansprüche 1 bis 10.

12. Sensoranordnung nach Anspruch 1, umfassend mindestens einen Sensor aus den Sensoren (7) für die folgenden physikalischen Größen: Feuchtigkeitssensor, Temperatursensor, Helligkeitssensor, Gassensor, insbesondere von $CO_2$.

13. Verfahren zur elektrischen Versorgung einer drahtlosen Sensoranordnung (5), wobei das Verfahren die Verwendung einer Versorgungsvorrichtung nach einem der Ansprüche 1 bis 10 umfasst.

**Claims**

1. Electrical power supply device for delivering an electrical power supply to a wireless sensor unit (5), with the power supply device comprising:

   - a first means of generating (12) electrical energy configured to recover an ambient energy in the environment of the sensor unit (5) and to produce an electrical energy according to the ambient energy recovered,
   - a second means of generating (13) electrical energy comprising a battery (13A), in order to deliver a backup electrical energy,
- a means for storing (15) electrical energy comprising a capacitor (15A) arranged in such a way as to receive an electrical energy coming from the first means of generating (12) and/or from the second means of generating (13), and to apply a given level of electrical power ($V_{DD}$) to the sensor unit (5),
- a circuit for managing electrical energy configured to maintain the given level of electrical power ($V_{DD}$) higher than a lower limit ($V_{minC1}$),

said circuit being further configured to limit said given level of electrical power lower than an upper limit ($V_{MAXC1}$), said circuit comprising a unipolar transistor (14A, 14B, 14C, 14D) and with a conducting channel when its gate-source voltage ($V_{GS}$) is zero, with the unipolar transistor being arranged in relation to the first means of generating (12), to the second means of generating (13), and to the means of storage (15), in such a way that the gate-source voltage depends on a difference between the electrical energy delivered by the second means of generating and the given level of power supply ($V_{DD}$).

2. Device according to claim 1, the unipolar transistor being a JFET transistor (14A, 14C).

3. Device according to claim 1, with the unipolar transistor being a MOSFET depletion transistor (14B, 14D).

4. Device according to any of the claims 1 to 3, further comprising means (D'int, D2) for recharging the means of storage (15) using the second means of generating (13) while still preventing a return of current to the second means of generating (13).

5. Device according to claim 4, wherein the unipolartransistor is a JFET transistor comprising an intrinsic junction between its gate and its channel, with the means (D'int, D2) for recharging the means of storage (15) using the second means of generating (13) still preventing a return of current to the second means of generating (13) include said intrinsic junction (D'int).

6. Device according to claim 4, wherein the means (D'int, D2) for recharging the means of storage (15) using the second means of generating (13) while still preventing a return of current to the second means of generating (13) include one diode (D2) between the gate and the source of the unipolar transistor.

7. Device according to any of the claims 1 to 6, wherein the second means of generating (13) comprises means (R1) for limiting a discharge current of the battery (13A).

8. Device according to any of the claims 1 to 7, wherein the unipolar transistor is a JFET transistor (14A, 14C), further comprising means (R2) for limiting a current through an intrinsic junction (D'int) between the gate and the channel of the JFET transistor.

9. Device according to any of the claims 1 to 8, further comprising means (D1) for blocking a return of current to the first means of generating (12).

10. Device according to any of the claims 1 to 9, with the first means of generating (12) comprising a photovoltaic module (12A).

11. Sensor unit (5) comprising:

- at least one sensor (7) of at least one physical magnitude to be measured,
- a processing circuit (6) connected to said sensor in order to process measurement data of the magnitude to be measured, and
- a radio frequency module (8) for wireless communication,
- one power supply device according to any of claims 1 to 10.

12. Sensor unit according to claim 11, comprising at least one sensor from among the following physical magnitude sensors: humidity sensor, temperature sensor, luminosity sensor, gas sensor, in particular $CO_2$.

13. Method of supplying with electricity a wireless sensor unit (5), with the method comprising then use of a power supply device according to any of claims 1 to 10.

**FIG. 1**

**FIG. 2**

FIG. 3

FIG. 4

FIG. 5

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2395594 A1
- US 7132757 B2
- US 20090026842 A